# EUROPEAN PATENT APPLICATION

(11) **EP 4 653 301 A1**
(43) Date of publication of application: **26.11.2025**
(21) Application number: 25173420.8
(22) Date of filing: 29.04.2025
(51) Int. Cl.: B62J 11/00, F16B 2/08, F16B 2/18, F16M 13/02

(54) **A MODULE AND A SYSTEM FOR THE COUPLING OF AN ACCESSORY TO A BICYCLE**

(30) Priority: 24.05.2024 PT 2024119486
(71) Applicant: Polisport Plásticos, SA, 3720-024 Carregosa (PT)
(72) Inventor: PINTO OLIVEIRA DE ARAÚJO, Pedro Jorge, Vale de Cambra (PT)
(74) Representative: do Nascimento Gomes, Rui

(57) **Abstract**

The present disclosure is enclosed in the area of accessories for bicycles, in particular the coupling of accessories to bicycles, more specifically a module (10) which provides the coupling of accessories of larger volume - such as child seats - to a bicycle. It refers to a module (10) for the coupling of an accessory to the frame (100) of a bicycle. The module (10) comprises a main body (20), a fastening part (30) and coupling means (40) configured to couple the module (10) to an accessory. The fastening part (30) comprises a clamping portion (31) and an adjustment portion (32). These, together with the main body (20), allow to clamp and regulate the clamping of the frame (100) of the bicycle to an accessory by means of the module (10), solidly and without resorting to tools, being particularly suitable for accessories such as child seats.

## Description

### FIELD OF THE DISCLOSURE

The present disclosure is enclosed in the area of accessories for bicycles, in particular the coupling of accessories to bicycles, more specifically modules which provide the coupling of accessories of larger volume - such as child seats - to a bicycle.

### PRIOR ART

Many different solutions exist in the art seeking to solidly couple an accessory such as a child seat to the frame of a bicycle, such that safety requirements are met and the child seat is steadily connected to the frame of the bicycle.

Yet, typically these known solutions require that two plates - which together embrace the frame of the bicycle - are connected by means of bolts and nuts, which have to be screwed. It is a procedure which offers a solid connection, but requires a considerable amount of time to implement, as well as the usage of a tool for screwing the bolts.

Other solutions exist which do not require using a tool. Typically, they include some kind of hand operatable coupling means already available in the coupling module. Yet, these solutions fail to provide a sufficiently solid connection between the accessory and the bicycle. This results in that such modules are not suitable for heavier accessories or accessories which may have to withstand the weight of a child, which is the case of child seats or racks, or bear a load, such as the case of cargo racks. In addition, while coupling an accessory such as a child seat to a frame of a bicycle, not only the maintenance of the coupling under the overall expected weight of the seat and the child has to be guaranteed, as it should be maintained under considerably higher weights, as the safety requirements to be met are much higher than with other types of accessories.

The present disclosure thus provides solutions to such issues, offering a simple coupling/decoupling of a module - and, thus, an accessory - to the frame of a bicycle while guaranteeing that such coupling is highly solid, even for overall weights above 25 kg.

### SUMMARY OF THE DISCLOSURE

The present disclosure refers to a module for the coupling of an accessory to the frame of a bicycle. The module comprises a main body, a fastening part and coupling means. In addition:
the main body forms an inward section for receiving at least partially a portion of a frame of a bicycle and a slot for receiving a portion of the fastening part, and
the fastening part comprises:
   a clamping portion which, in cooperation with the inward section of the main body, surrounding the portion of the frame of a bicycle, when therein provided and when the fastening part is provided in the slot of the main body, the clamping portion having a first end rotatably coupled to the main body and a second, opposite, end rotatably coupled to the adjustment portion, and
   an adjustment portion which consists of the portion of the fastening part providable in the slot of the main body, the adjustment portion being i) fully detachable from the slot of the main body and ii) configured to regulate the clamping of the frame of the bicycle between the inward section and the clamping portion by clamping together the fastening part and the main body, when therein provided and when the fastening part is provided in the slot of the main body,
the coupling means being configured to couple the module to an accessory, thereby providing the coupling of the accessory to the frame of a bicycle.

The slot of the main body may be provided such that crosses the main body from a first side to a second side, the adjustment portion being laterally provided therein.

The adjustment portion may comprise a stopper element, a screw and a knob, the stopper element blocking the adjustment portion in a side of the slot of the main body, the screw connecting the stopper element and the knob, and the knob providing the regulation of the clamping of the frame of the bicycle between the inward section and the clamping portion, by its actuation along the screw, until the knob blocks the adjustment portion in an opposite side of the slot of the main body.

The module may comprise further comprises torque control means associated with the knob, the torque control means being preventing the further clamping of a frame of a bicycle, upon reaching a predefined clamping through the blocking of the adjustment portion by the knob.

The torque control means may comprise a spring and a ratchet configured to prevent the further clamping, whereby reaching the predefined clamping actuates the spring and the ratchet, and a consequent release of the spring causes an audible sound.

The clamping portion may comprise at least one flat surface provided between its first and second ends.

The clamping portion may comprise two flat surfaces, each having a first end rotatably coupled to the main body and a second, opposite, end rotatably coupled to the adjustment portion, wherein the adjustment portion is provided between the second ends of the two flat surfaces.

The module may further comprise a second fastener, a first end of the second fastener being rotatably coupled to the adjustment portion of the fastening part, the axis of rotation of the second fastener being parallel to the axis of rotation of the clamping portion with the main body, and a second end of the second fastener being movable between a first position away from the main body and a second position adjacent to the main body, wherein, when the fastening part is provided in the slot of the main body and the second fastener is in the second position, the second fastener blocks the fastening part in such position.

The second fastener and the main body may be so configured that, when the second fastener is in the second position, it is embedded in a corresponding recess of the main body.

The module may further comprise a blocking rod and the main body may have two through-holes (20t) and the second fastener has a through hole (23t), wherein the three through-holes (20t, 23t) are aligned when the second fastener is in the second position, the blocking rod being providable through the three aligned through-holes (20t, 23t) such that it blocks the second fastener in the coupled position, and the alignment of the three through-holes (20t, 23t) is parallel to the axis of rotation of the clamping portion with the main body.

The blocking rod may comprise a blocking rod stopper in one of its ends, the blocking rod stopper preventing the blocking rod from further entering the through-holes.

The main body may have a substantially cylindrical form, the inward section and the slot being formed in the curvilinear surface of the cylinder.

An inner surface of the clamping portion and an inner surface of the inward section, both contacting the frame of a bicycle when clamping a frame of a bicycle, may be covered with an elastomeric material.

The clamping portion may have a main steel surface, the elastomeric material being provided in its inner surface.

The present disclosure may further include the use of the module of the present disclosure for coupling one of a child seat, a carrier plate, a rack, a light or a windshield to the frame of a bicycle.

The present disclosure may also further include a method for coupling an accessory to a bicycle with the module of the present disclosure. The method includes the following steps:
providing a portion of the frame of the bicycle within the inward section of the module, when the adjustment portion is fully detached from the slot of the main body,
surrounding the portion of the frame with clamping portion of the fastening part,
providing the adjustment portion within the slot of the main body,
regulating the clamping of the frame of the bicycle between the inward section and the clamping portion by means of the adjustment portion, and
coupling the accessory to the coupling means of the module.

### DESCRIPTION OF THE DRAWINGS

Figure 1a - A first perspective, rear view representation of the module (10) of the present disclosure. For a matter of simplicity of the used terms, such view is established to be a rear view. The adjustment portion (32) is provided in the slot (22) of the main body (20). Particularly, the stopper element (33) is provided in the slot (22) such that it blocks the adjustment portion (32) in a side of the slot (22) of the main body (20) - which is a side facing the front of the module (10). The screw (34) is viewable, and connects the stopper element (33) and the knob (35). The knob (35) is so regulated that the clamping portion (31) is loose - as can be seen in the figure -, i.e., the portion of the frame (100) is actually not yet clamped by the module (10). The knob (35), as can be seen, is provided in an opposite side of the slot (22) of the main body (20), particularly the so-called rear side.

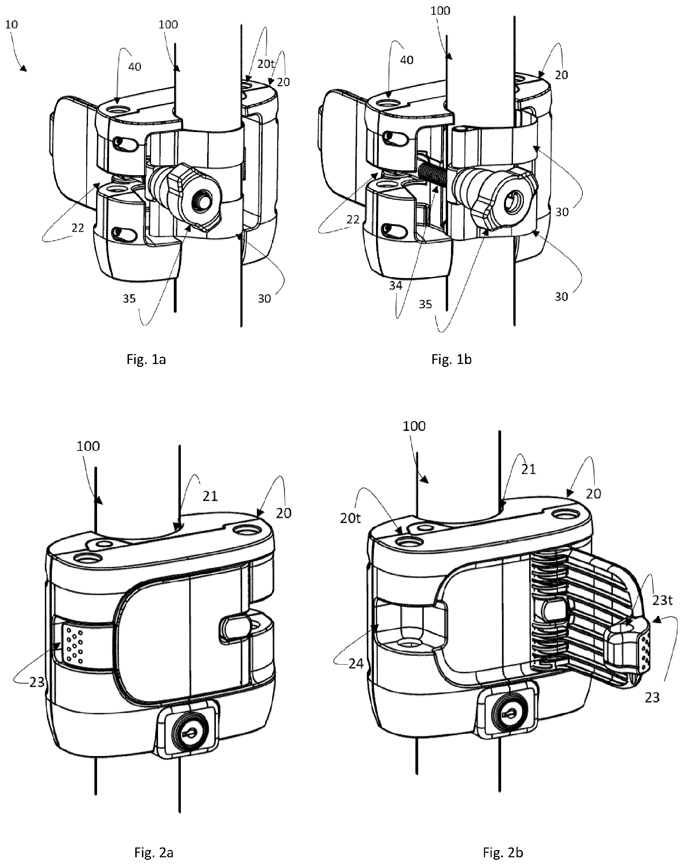

Figure 1b - A second perspective, rear view representation of the module (10) of the present disclosure. This positioning of the elements of the module (10) is subsequent to that of Figure 1a, when the module (10) is being provided on a portion of the frame (100) of a bicycle in order to clamp such portion. The adjustment portion (32) is still provided in the slot (22) of the main body (20). The stopper element (33) is also still provided in the slot (22) such that it blocks the adjustment portion (32) in the front side of the slot (22) of the main body (20). The knob (35) is now so regulated that the clamping portion (31) is clamping the portion - as can be seen from the comparison with Figure 1a -, i.e., the portion of the frame (100) is clamped by the module (10). The screw (34) is now not viewable, as the knob (35) was moved along it in order to provide the clamping of the portion. The portion of the frame (100) is clamped between the inward section (21) of the main body (20) and the clamping portion (31) of the adjustment part. The tightening of the knob (35) provides such clamping.
Figure 2a - A first perspective, frontal view representation of the module (10) of the present disclosure, when coupled to a portion of a frame (100) of a bicycle, in which the second end of the second fastener (23) is decoupled from the main body (20). For a matter of simplicity of the used terms, such view is established to be a frontal view.
Figure 2b - A second perspective, frontal view representation of the module (10) of the present disclosure, when coupled to a portion of a frame (100) of a bicycle, in which the second end of the second fastener (23) is coupled to and embedded in the main body (20).
Figure 3a - A representation of a top view of a module (10) according to the present disclosure. The figure corresponds to a first step of a positioning of such module (10) to clamp a portion of a frame (100) of a bicycle. The frame (100) of the bicycle is represented in cross-section view, as a grey circle. The fastening part (30) is represented out of the slot (22) of the main body (20), such that the module (10) may be provided around the frame (100), which rests in the inward section (21) of the main body (20). The second fastener (23) is away from the main body (20), in its first position.

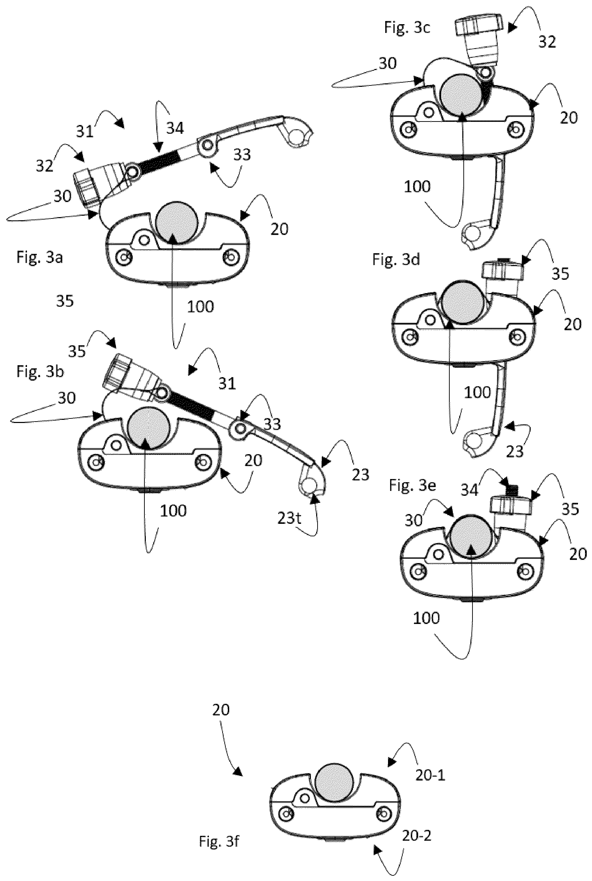

Figure 3b - A representation of a top view of a module (10) according to the present disclosure. The figure corresponds to a second step of a positioning of such module (10) to clamp a portion of a frame (100) of a bicycle, after the step of Figure 3a. The fastening part (30) is approaching the main body (20) such that it is provided inside the slot (22).
Figure 3c - A representation of a top view of a module (10) according to the present disclosure. The figure corresponds to a third step of a positioning of such module (10) to clamp a portion of a frame (100) of a bicycle, after the step of Figure 3b. The fastening part (30) is now inside the slot (22). The knob (35) has not yet been regulated, and an inner part of the screw (34) is viewable. The clamping portion (31) is loose, for the frame (100) is not yet clamped by the module (10).
Figure 3d - A representation of a top view of a module (10) according to the present disclosure. The figure corresponds to a fourth step of a positioning of such module (10) to clamp a portion of a frame (100) of a bicycle, after the step of Figure 3c. The knob (35) has now been regulated, for the inner part of the screw (34) is no longer viewable. Instead, the outer part of the screw (34) is viewable. The clamping portion (31) is now tightened to the frame (100), which is clamped between the clamping portion (31) and the inward section (21). The second fastener (23) is still in the first position, wherein this arrangement corresponds to the arrangement of Figure 2a.
Figure 3e - A representation of a top view of a module (10) according to the present disclosure. The figure corresponds to a fifth step of a positioning of such module (10) to clamp a portion of a frame (100) of a bicycle, after the step of Figure 3d. The second fastener (23) is now in the second position, adjacent to the main body (20), specifically provided in a corresponding recess (24) of the main body (20), wherein this arrangement corresponds to the arrangement of Figure 2b.
Figure 3f - A partial representation of a top view of a module according to the present disclosure, highlighting the first (20-1) and second (20-2) sides of the main body (20).

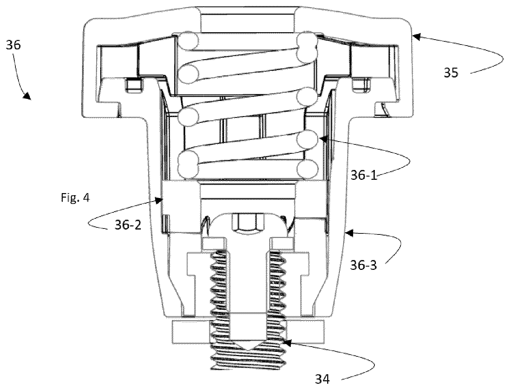

Figure 4 - a representation of a cross-section of torque control means (36) according to the present disclosure. The figure represents the knob (35) and the associated chamber (36-3) containing the spring (36-1) and the ratchet (36-2) mechanism. Such assembly may be a component of the fastening part (30) as shown in figures 1-3.

### DETAILED DESCRIPTION

The module (10) of the present disclosure comprises a main body (20), a fastening part (30) and coupling means (40). These main body (20) and the fastening part (30) are configured to provide the clamping of a portion of a bicycle and, through such clamping, couple an accessory coupled to the coupling means (40) to the bicycle. Figure 1a shows a step of the provision of a module (10) to clamp a portion of the frame (100) of a bicycle. The adjustment part is provided in the slot (22) of the main body (20), but the module (10) is not yet clamping the portion of the frame (100). Clamping is the provision of the module (10) on the frame (100) such that they are coupled, and an accessory can then be considered as duly fastened or coupled to the bicycle.

The portion of the frame (100) of the bicycle is provided between an inward section (21) of the main body (20) and a clamping portion (31) of the fastening part (30). This provision can be seen in Figure 1b.

Also, as per Figures 1a and 1b, the main body (20) is so configured that forms an inward section (21) in such body. The inward section (21) is configured to receive at least partially a portion of a frame (100) of a bicycle and a slot (22) for receiving a portion of the fastening part (30). In an embodiment, the inward section (21) receives part of a portion of a frame (100) of the bicycle, and the clamping portion (31) covers the other part, providing the clamping. The covering that the inward section (21) and the clamping portion (31) provide is along a perimeter of a portion of the frame (100).

Thus, the clamping portion (31), in cooperation with the inward section (21) of the main body (20), surrounds the portion of the frame (100) of a bicycle, when therein provided and when the fastening part (30) is provided in the slot (22) of the main body (20).

Moreover, and still following Figures 1a and 1b, the clamping portion (31) has a first end rotatably coupled to the main body (20) and a second end rotatably coupled to the adjustment portion (32). The second end is opposite to the first end.

These provisions allow that the several elements of the module (10) remain together as an assembly, while allowing a user - without resorting to tools - couples and decouples the module (10) from the frame (100) of a bicycle.

The actual adjustment of the module (10) to the frame (100), such that it is coupled to it, is provided by means of the regulation of an adjustment portion (32). The adjustment portion (32) is the portion of the fastening part (30) providable in the slot (22) of the main body (20), as shown in Figure 1a.

Figures 3a to 3d show several subsequent steps (from a to e) of coupling of an embodiment of the module (10) of the present disclosure to a portion of a frame (100) of a bicycle. The full steps a to h refer to a specific embodiment of the module (10) of the present disclosure. Specifically, steps of Figures 3a to 3d provide a clamping of a module (10) of the present disclosure according to an embodiment, in which a second fastener (23) is not provided.

Moreover, the adjustment portion (32) is fully detachable from the slot (22) of the main body (20) whereby, when it is detached from the slot (22), it allows that the portion of the frame (100) is provided in the inward section (21) of the main body (20), as represented in Figure 3a. When the adjustment portion (32) is provided in the slot (22) - as shown in the steps of figures 3b and 3c - it is then configured to regulate the clamping of the frame (100) of the bicycle between the inward section (21) and the clamping portion (31), as shown in Figure 3d, by clamping together the fastening part (30) and the main body (20), bringing these two parts together. Such clamping together corresponds to the fastening part (30) and the main body (20) approaching each other, tightening the frame (100) of the bicycle. The detaching of the adjustment may be possible along a direction which is substantially perpendicular to the direction of regulation of the adjustment portion (32).

Therefore, and through the regulation of the adjustment portion (32), the frame (100) of the bicycle is clamped by the module (10) without resorting to tools. In addition, the provision of the adjustment portion (32) in the slot (22) of the main body (20) and the cooperation between the adjustment portion (32) and the main body (20) provide a highly solid coupling of the module (10) to the frame (100), allowing that - by means of the module (10) - heavy loads are coupled to the bicycle. Child seats/carriers are required to have an overall weight - the weight of the seat and of the child - which may be above 25 kg. In addition, they should be solidly coupled to the bicycle, beyond any risk. The module (10) of the present disclosure, through the two cooperation connections of the adjustment portion (32) to the slot (22) and the regulation which tightens the frame (100) by the ensemble inward section (21)/clamping portion (31), provides such highly steady coupling.

The coupling means (40) are configured to couple the module (10) to an accessory, thereby providing the coupling of the accessory to the frame (100) of a bicycle. The coupling to the accessory may be provided directly from the accessory into the coupling means (40) or by means of an elongated connector, which couples to the coupling means (40) and then to the accessory.

The coupling means (40) may comprise one, two or more openings provided in the main body (20). Considering the example of two openings, they may be provided in diametrically opposite positions of the main body (20), particularly in a face perpendicular to the so-called frontal and rear faces, whereby the adjustment portion (32) is provided along the rear face. The elongated connecter may thus couple to the openings and extend until the accessory, which is provided apart from the module (10).

The portion of the frame (100) of a bicycle to which the module (10) is couplable may comprise the steering column of a frame (100) of a bicycle or a seat tube of a frame (100) of a bicycle.

The views of Figures 1a and 1b are considered to be rear views since a user may place it facing the back of the bicycle, when a child seat/carrier is the accessory. Yet, the module (10) of the present disclosure, when provided in a frame (100) of a bicycle and depending of the positioning of the coupling means (40), may face different positions of a bicycle.

The slot (22) of the main body (20) may cross the main body (20) from a first side (20-1) to a second side (20-2), the adjustment portion (32) being laterally provided therein, as provided in Figures 1a and 1b, and sequentially shown in figures 3a to 3e, thereby allowing a simplified yet solid coupling between the fastening part (30) and the main body (20).

The adjustment portion (32) comprises a stopper element (33), a screw (34) and a knob (35). The stopper element (33) is fully viewable in figures 3a and 3b. The stopper element (33) is providable in the slot (22) of the main body (20), in a side of the main body (20) which corresponds to the front side of the module (10). The slot (22) thus is adapted to accommodate the stopper element (33) such that it blocks the adjustment portion (32) in a side of the slot (22) of the main body (20). Particularly, the adjustment portion (32) may be again removed from the slot (22). Such removal may be possible along a direction which is substantially perpendicular to the direction of regulation of the knob (35) along the screw (34).

The screw (34) connects the stopper element (33) and the knob (35), and the knob (35) regulates the clamping of the frame (100) by its actuation along the screw (34). The regulation of the knob (35) along the screw (34) is viewable in the change from Figure 1a to Figure 1b and from Figure 3c to Figure 3d. In both cases, the knob (35) was moved along the screw (34) by means of rotation, thereby approaching the clamping portion (31) to the inward section (21) and clamping the frame (100). The knob (35) reaches a position in which the clamping is tight, and therein blocks the adjustment portion (32) in an opposite side of the slot (22) of the main body (20).

The module (10) may further comprise torque control means (36) associated with the knob (35), the torque control means (36) being configured to prevent the further clamping of a frame (100) of a bicycle, upon reaching a predefined clamping through the blocking of the adjustment portion (32) by the knob (35). These torque control means (36) are so configured that the predefined clamping - i.e., the pressure which is exerted through the clamping of clamping part and inward section (21)/main body (20) - is not over that predefined value, avoiding that the elements are not unnecessarily worn out.

The torque control means (36) may comprise a spring (36-1) and a ratchet (36-2) as provided in Figure 4 - wherein the spring (36-1) and the ratchet (36-2) mechanism may be provided inside a chamber (36-3) associated with the knob (35) - configured to prevent the further clamping, whereby reaching the predefined clamping actuates the ratchet (36-2) and the spring (36-1) and a consequent release of the spring (36-1) causes an audible sound. When the predefined clamping - the said pressure - is reached, the ratchet (36-2) mechanism which is pushing against the spring (36-1) slips/is released, and the spring (36-1) effectively stops further torque application to the fastener by the knob (35). It thereby makes an audible sound which informs the user that such position was reached.

As of the embodiments of Figures 1a, 1b or 3a-3, the clamping portion (31) may comprise at least one flat surface provided between its first and second ends. As of the embodiments of such Figures 1a, 1b, 3a-3e, the clamping portion (31) comprises two flat surfaces, and each of such surfaces has a first end rotatably coupled to the main body (20) and a second, opposite, end rotatably coupled to the adjustment portion (32), wherein the adjustment portion (32) is provided between the second ends of the two flat surfaces. The flat surfaces enable a solid clamping of the frame (100) while not overly increasing the dimensions of the module (10).

The module (10) may further comprise a second fastener (23). The second fastener (23) is represented in Figures 2a, 2b, in which it is provided in the side of the module (10)/main body (20) which has been set as the frontal side. A first end of the second fastener (23) may be rotatably coupled to the adjustment portion (32) of the fastening part (30) - as seen in Figure 2a, which shows a position in which the second fastener (23) is away from the main body (20), only being coupled by the first end. Also as shown in Figure 2a, the axis of rotation of the second fastener (23) is parallel to the axis of rotation of the clamping portion (31) with the main body (20).

A second end of the second fastener (23) may be movable between a first position away from the main body (20) and a second position adjacent to the main body (20), wherein, when the fastening part (30) is provided in the slot (22) of the main body (20) and the second fastener (23) is in the second position, the second fastener (23) blocks the fastening part (30) in such position.

Thus, the second fastener (23) provides a further level of solid connection between the frame (100) and the module (10). Particularly, it further impedes that the adjustment part is removed - either willingly or accidentally - from its position in the slot (22). The passage of the second fastener (23) from the first position away from the main body (20) to the second position adjacent to the main body (20) is viewable in the transition of Figure 2a to Figure 2b and of Figure 3d to Figure 3e.

The second fastener (23) and the main body (20) may be so configured that, when the second fastener (23) is in the second position, it is embedded in a corresponding recess (24) of the main body (20).

The module (10) may further comprise a blocking rod (not shown in the figures). The blocking rod is not represented in the figures. The main body (20) may thus have two through-holes (20t) and the second fastener (23) has a through hole, wherein the three through-holes (20t, 23t) are aligned when the second fastener (23) is in the second position, the blocking rod being providable through the three aligned through-holes (20t, 23t) such that it blocks the second fastener (23) in the coupled position, and the alignment of the three through-holes (20t, 23t) is parallel to the axis of rotation of the clamping portion (31) with the main body (20).

Thus, the blocking rod and the respective through-holes (20t, 23t) of the main body (20) and the second fastener (23) provide an even further level of solid connection between the frame (100) and the module (10). Particularly, it they impede that the second fastener (23) is moved and, thus, that adjustment part is removed - either willingly or accidentally - from their positions in the slot (22). The blocking rod provides such blockage when the second fastener (23) and fastening part (30) are provided in the positions of Figures 2b and 3e.

The blocking rod may comprise a blocking rod stopper in one of its ends (not shown in the figures), the blocking rod stopper preventing the blocking rod from further entering the through-holes (20t, 23t). It thus enables an easy positioning and removal of the blocking rod from the through-holes (20t, 23t).

As is the case with the embodiments represented in the Figures, the main body (20) has a substantially cylindrical form, the inward section (21) and the slot (22) being formed in the curvilinear surface of the cylinder.

An inner surface of the clamping portion (31) and an inner surface of the inward section (21), both contacting the frame (100) of a bicycle when clamping a frame (100) of a bicycle, may be covered with an elastomeric material, thereby providing an adjustment of the module (10) to the frame (100) of the bicycle.

The clamping portion (31) may have a main steel surface, the elastomeric material being provided in its inner surface. The clamping portion (31) may thus be formed as a sheet or strip of the associated main steel surface with the elastomeric material provided in an inner surface.

The method of the present disclosure may be adapted to be implemented by the module (10) of the present disclosure, in any of the embodiments previously described.

As will be clear to one skilled in the art, the present disclosure should not be limited to the embodiments described herein, and a number of changes are possible which remain within the scope of the present disclosure.

Of course, the embodiments described above are combinable, in the different possible forms, being herein avoided the repetition all such combinations.

## Claims

1. A module (10) for the coupling of an accessory to the frame (100) of a bicycle, the module (10) comprising a main body (20), a fastening part (30) and coupling means (40), wherein:
the main body (20) forms an inward section (21) for receiving at least partially a portion of a frame (100) of a bicycle and a slot (22) for receiving a portion of the fastening part (30), and
the fastening part (30) comprises:
a clamping portion (31) which, in cooperation with the inward section (21) of the main body (20), surrounds the portion of the frame (100) of a bicycle, when therein provided and when the fastening part (30) is provided in the slot (22) of the main body (20), the clamping portion (31) having a first end rotatably coupled to the main body (20) and a second, opposite, end rotatably coupled to the adjustment portion (32), and
an adjustment portion (32) which consists of the portion of the fastening part (30) providable in the slot (22) of the main body (20), the adjustment portion (32) being i) fully detachable from the slot (22) of the main body (20) and ii) configured to regulate the clamping of the frame (100) of the bicycle between the inward section (21) and the clamping portion (31) by clamping together the fastening part (30) and the main body (20), when therein provided and when the fastening part (30) is provided in the slot (22) of the main body (20),
the coupling means (40) being configured to couple the module (10) to an accessory, thereby providing the coupling of the accessory to the frame (100) of a bicycle.

2. A module (10) according to the previous claim wherein the slot (22) of the main body (20) crosses the main body (20) from a first side (20-1) to a second side (20-2), the adjustment portion (32) being laterally provided therein.

3. A module (10) according to any of the preceding claims wherein the adjustment portion (32) comprises a stopper element (33), a screw (34) and a knob (35), the stopper element (33) blocking the adjustment portion (32) in a side of the slot (22) of the main body (20), the screw (34) connecting the stopper element (33) and the knob (35), and the knob (35) providing the regulation of the clamping of the frame (100) of the bicycle between the inward section (21) and the clamping portion (31), by its actuation along the screw (34), until the knob (35) blocks the adjustment portion (32) in an opposite side of the slot (22) of the main body (20).

4. A module (10) according to the previous claim wherein it further comprises torque control means (36) associated with the knob (35), the torque control means (36) being configured to prevent the further clamping of a frame (100) of a bicycle, upon reaching a predefined clamping through the blocking of the adjustment portion (32) by the knob (35).

5. A module (10) according to the previous claim wherein the torque control means (36) comprise a spring (36-1) and a ratchet (36-2) configured to prevent the further clamping, whereby reaching the predefined clamping actuates the ratchet (36-2) and the spring (36-1), and a consequent release of the spring (36-1) causes an audible sound.

6. A module (10) according to any of the preceding claims wherein the clamping portion (31) comprises at least one flat surface provided between its first and second ends.

7. A module (10) according to the previous claim wherein the clamping portion (31) comprises two flat surfaces, each having a first end rotatably coupled to the main body (20) and a second, opposite, end rotatably coupled to the adjustment portion (32), wherein the adjustment portion (32) is provided between the second ends of the two flat surfaces.

8. A module (10) according to any of the preceding claims wherein it further comprises second fastener (23), a first end of the second fastener (23) being rotatably coupled to the adjustment portion (32) of the fastening part (30), the axis of rotation of the second fastener (23) being parallel to the axis of rotation of the clamping portion (31) with the main body (20), and a second end of the second fastener (23) being movable between a first position away from the main body (20) and a second position adjacent to the main body (20), wherein, when the fastening part (30) is provided in the slot (22) of the main body (20) and the second fastener (23) is in the second position, the second fastener (23) blocks the fastening part (30) in such position.

9. A module (10) according to the previous claim wherein, when the second fastener (23) and the main body (20) are configured such that, when the second fastener (23) is in the second position, it is embedded in a corresponding recess (24) of the main body (20).

10. A module (10) according to any of the claims 8-9 wherein it further comprises a blocking rod and the main body (20) has two through-holes (20t) and the second fastener (23) has a through hole (23t), wherein the three through-holes (20t, 23t) are aligned when the second fastener (23) is in the second position, the blocking rod being providable through the three aligned through-holes (20t, 23t) such that it blocks the second fastener (23) in the coupled position, and the alignment of the three through-holes (20t, 23t) is parallel to the axis of rotation of the clamping portion (31) with the main body (20).

11. A module (10) according to the previous claim wherein the blocking rod comprises a blocking rod stopper in one of its ends, the blocking rod stopper preventing the blocking rod from further entering the through-holes (20t, 23t).

12. A module (10) according to any of the preceding claims wherein the main body (20) has a substantially cylindrical form, the inward section (21) and the slot (22) being formed in the curvilinear surface of the cylinder.

13. A module (10) according to any of the preceding claims wherein an inner surface of the clamping portion (31) and an inner surface of the inward section (21), both contacting the frame (100) of a bicycle when clamping a frame (100) of a bicycle, are covered with an elastomeric material, optionally wherein the clamping portion (31) has a main steel surface, the elastomeric material being provided in its inner surface.

14. Use of the module (10) of any of the preceding claims for coupling one of a child seat, a carrier plate, a rack, a light or a windshield to the frame (100) of a bicycle.

15. A method for coupling an accessory to a bicycle comprising the steps of, with the module (10) of claim 1:
providing a portion of the frame (100) of the bicycle within the inward section (21) of the module (10), when the adjustment portion (32) is fully detached from the slot (22) of the main body (20),
surrounding the portion of the frame (100) with clamping portion (31) of the fastening part (30),
providing the adjustment portion (32) within the slot (22) of the main body (20),
regulating the clamping of the frame (100) of the bicycle between the inward section (21) and the clamping portion (31) by means of the adjustment portion (32), and
coupling the accessory to the coupling means (40) of the module (10).
